# EUROPÄISCHE PATENTSCHRIFT

(11) **EP 4 105 615 B1**
(45) Veröffentlichungstag und Bekanntmachung des Hinweises auf die Patenterteilung: **12.03.2025**
(21) Anmeldenummer: 21180316.8
(22) Anmeldetag: 18.06.2021
(51) Int. Cl.: G01F 25/00, G01F 11/28, G01F 11/00, G01F 22/00, B65B 5/10

(54) **VERFAHREN ZUR DOSIERUNG VON DARREICHUNGSEINHEITEN UND VERWENDUNG EINES DOSIERVENTILS IN EINER KALIBRIEREINRICHTUNG FÜR EIN KAPAZITIVES MESSSYSTEM**
METHOD FOR METERING UNITS AND USE OF A DOSING VALVE IN A CALIBRATION DEVICE FOR A CAPACITIVE MEASURING SYSTEM
PROCÉDÉ DE DOSAGE POUR UNITÉS POSOLOGIQUES ET UTILISATION D'UNE VANNE DOSEUSE DANS UN DISPOSITIF D'ÉTALONNAGE POUR UN SYSTÈME DE MESURE CAPACITIF

(43) Veröffentlichungstag der Anmeldung: 21.12.2022
(73) Patentinhaber: Harro Höfliger Verpackungsmaschinen GmbH, 71573 Allmersbach im Tal (DE)
(72) Erfinder: Schikora, Jan, 71573 Allmersbach im Tal (DE); Calva, Ana, 71573 Allmersbach im Tal (DE); Mayer, Stefan, 71573 Allmersbach im Tal (DE)
(74) Vertreter: Zurhorst, Stefan

(56) Entgegenhaltungen:
- EP-A1- 2 030 895
- EP-A1- 3 279 618
- WO-A1-98/04358
- DE-A1- 102010 035 599
- KR-A- 20130 045 296
- US-A1- 2013 099 023
- US-A1- 2019 151 840

## Beschreibung

Die Erfindung betrifft ein Verfahren zur Dosierung von Darreichungseinheiten mittels einer Dosiereinrichtung unter Einbeziehung einer Kalibriereinrichtung, sowie die Verwendung eines Dosierventils in der Kalibriereinrichtung.

Beispielsweise im pharmazeutischen Bereich kommt es auf eine exakte und wiederholbare Dosierung von Darreichungseinheiten an, damit der Patient exakt die vorgesehene Menge an Wirkstoff zu sich nimmt. Feste Darreichungsformen können beispielsweise Tabletten oder in Steckkapseln bereitgestellte Pulvermengen bzw. Pellets sein. Daneben kommen auch beliebige andere Darreichungsformen in fester oder flüssiger Ausführung in Betracht. Im Regelfall erfolgt die Dosierung solcher Darreichungseinheiten auf volumetrischem Wege, wobei über ein bestimmtes abgemessenes Volumen und die Dichte des Materials eine bestimmte Zielmasse angestrebt wird. Letztlich ist es aber nicht das Volumen, sondern die tatsächlich bei der Dosierung erzielte Masse der einzelnen Darreichungseinheiten, auf die es ankommt. Dichteschwankungen im Material, unvollständige Ausfüllungen bzw. Entleerungen der volumetrischen Messkammer oder dgl. können zu unerwünschten Schwankungen der Zielmasse führen. Insbesondere bei kritischen Wirkstoffen ist deshalb eine verlässliche Prozesskontrolle erforderlich.

Für die Kontrolle eines ordnungsgemäßen Ablaufes des Dosiervorganges beschreibt die EP 3 279 618 B1 eine Massebestimmung der einzelnen zuvor abgemessenen Darreichungseinheiten mittels eines kapazitiven Messsystems. Für die Kalibrierung des kapazitiven Messsystems ist eine Kalibriereinrichtung vorgesehen, in welcher ein Prüfkörper mittels entsprechender Antriebsmittel entlang einer Führungsstrecke im Messkanal des kapazitiven Messsystems zwischen zwei Endpositionen hin und her bewegt wird. Der Prüfkörper wirkt dabei als Prüfnormal, wobei das zugehörige Messergebnis des kapazitiven Messsystems als Kalibriermesswert herangezogen wird.

Aufbau und Kalibrierverfahren haben sich zumindest bei der initialen Kalibrierung im Herstellungswerk der Maschine bewährt. Problematisch ist aber, dass Darreichungseinheiten von sehr unterschiedlicher Masse dosiert und abgefüllt werden. Zwar kann das kapazitive Messsystem eine große Messbreite abdecken, wobei es jedoch schwierig ist, innerhalb der gesamten Messbreite die erforderliche Messgenauigkeit einzuhalten. Die Kalibrierung sollte also möglichst nahe bei der jeweiligen Zielmasse erfolgen, um eine hohe Genauigkeit zu erreichen. Das setzt nach dem beschriebenen Stand der Technik voraus, dass eine Vielzahl von Prüfkörpern mit unterschiedlichen Massen bereitsteht, wobei diese Massen teilweise nur wenige Milligramm betragen. Entsprechende Prüfkörper sind nur schwer und kostspielig zu beschaffen und außerdem schwierig zu handhaben. Eine Änderung der Zielmasse führt häufig zu der Notwendigkeit einer erneuten Kalibrierung, was dann aber nicht mehr im Herstellwerk der Maschine, sondern an deren Betriebsort zu erfolgen hat. In der Praxis hat sich außerdem gezeigt, dass im laufenden Produktionsbetrieb von Zeit zu Zeit eine Nachkalibrierung erforderlich ist. Die Kalibrierung nach dem genannten Stand der Technik ist hierfür aufwändig und kostspielig. Außerdem ist sie vom Betreiber der Maschine kaum handhabbar, sodass entsprechendes Service-Personal zum Einsatz kommen muss.

Die Verwendung von festen Prüfkörpern zum Kalibrieren ist noch aus der EP 2 030 895 A1 bekannt. Die US 2019/0151840 A1, die DE 10 2010 035 599 A1, die WO 98/04358 A1 und die US 2013/0099023 A1 offenbaren Möglichkeiten, wie mit Dosierventilen Tropfen mit definiertem Volumen erzeugt werden können.

Der Erfindung liegt des Weiteren die Aufgabe zugrunde, ein insbesondere großserientaugliches Dosierverfahren anzugeben, mittels dessen unterschiedliche Zielmassen der Darreichungseinheiten zuverlässig und wiederholbar eingehalten werden können.

Diese Aufgabe wird durch ein Verfahren mit den Merkmalen des Anspruchs 1 gelöst.

Der Erfindung liegt noch die Aufgabe zugrunde, eine vereinfachte Kalibriereinrichtung anzugeben.

Diese Aufgabe wird durch die Verwendung eines Dosierventils mit den Merkmalen des Anspruchs 6 gelöst.

Die Erfindung basiert auf dem Grundgedanken, beim Kalibrieren von einem Vorrat an vorbereiteten Feststoff-Prüfkörpern unterschiedlichster Masse Abstand zu nehmen, und stattdessen einen dem jeweiligen Kalibrierszenario angepassten Prüfkörper erst bei der Ausführung der Kalibrierroutine als Flüssigkeitsteilmenge von definiertem Volumen zu bilden, und diese Flüssigkeitsteilmenge dann als Prüfkörper durch den Messkanal zu leiten. Gemäß der Erfindung findet ein an sich bekanntes Dosierventil in der Kalibriereinrichtung Verwendung, wodurch sich Flüssigkeitsteilmengen von sehr exakt bemessenem Volumen als Prüfkörper generieren lassen. Die hinsichtlich ihrer dielektrischen Eigenschaften gewählte Prüf-Flüssigkeit ist auch hinsichtlich ihres spezifischen Gewichts klar definiert, sodass sich aus dem exakten Volumen eine ebenso exakt definierte Masse herleiten lässt. Das Dosierventil erlaubt nicht nur die Generierung von exakt bemessenen Flüssigkeitsteilmengen, sondern kann diese in der gewünschten Exaktheit auch über einen großen Volumen- bzw. Massebereich in der erforderlichen Genauigkeit liefern. Insgesamt können gemäß der Erfindung die erforderlichen Prüfkörper auf einfachste Weise unmittelbar bei Bedarf und dabei in bedarfsgerechter Größe generiert und eingesetzt werden. Die aufwändige Beschaffung und Bevorratung von festen Prüfkörpern unterschiedlichster Größe entfällt. Auch die Vorrichtung als solche ist einfach und kostengünstig. Im Übrigen ist deren Handhabung so einfach, dass die Kalibrierroutine am Betriebsort vom Betreiberpersonal sogar unter Reinraumbedingungen durchgeführt werden kann.

Im Rahmen der Erfindung kommen Dosierventile unterschiedlichster Bauform in Betracht. Bevorzugt weist das das Dosierventil einen Piezo-Aktuator und ein Flüssigkeitsreservoir auf. In dieser Kombination treffen klar definierte Verschluss- und Öffnungszeiten mit kurzen Förderwegen der Prüfflüssigkeit zusammen. Es entsteht ein exaktes Profil des zeitlichen Verlaufs der Flüssigkeitsförderung mit einer im Ergebnis ebenso exakten und reproduzierbaren Menge bzw. Tropfengröße.

In vorteilhafter Weiterbildung weist das Flüssigkeitsreservoir einen Druckanschluss zur Einspeisung eines Überdrucks auf. Der Überdruck erlaubt eine gleichmäßige und hinsichtlich der Austrittsgeschwindigkeit klar definierte Flüssigkeitsförderung, welche im Wesentlichen unabhängig von der Füllhöhe der Prüfflüssigkeit im Flüssigkeitsreservoir ist. Es lässt sich ein quasi-konstanter Förderdruck einstellen und aufrechterhalten.

In einer bevorzugten Ausführung werden mehrere Kalibriermessungen vorgenommen, wobei bei verschiedenen Kalibriermessungen ein Überdruck von jeweils unterschiedlichem Betrag in das Flüssigkeitsreservoir eingespeist wird, um Flüssigkeitsteilmengen mit unterschiedlicher Geschwindigkeit auszustoßen. Hierdurch kann die Sensitivität des Sensors gegen variierende Durchtrittsgeschwindigkeiten geprüft werden. Dies kann insbesondere dann zweckmäßig sein, wenn die Dosiereinrichtung dazu neigt, im laufenden Betrieb hinsichtlich ihrer Ausstoßgeschwindigkeit nachzulassen oder ganz allgemein zu schwanken.

In vorteilhafter Weiterbildung wird mittels einer Kamera die Geometrie der Flüssigkeitsteilmenge erfasst. Aus der erfassten Geometrie wird das Volumen und daraus zusammen mit der Dichte der verwendeten Flüssigkeit die Masse der Flüssigkeitsteilmenge abgeleitet. Dies erlaubt eine Kontrolle bzw. Überprüfung des Dosierventils hinsichtlich der angeforderten und tatsächlich auch abgegebenen Flüssigkeitsteilmenge.

In einer bevorzugten Ausführung des Verfahrens wird bei einer einzelnen Kalibriermessung eine einzelne Flüssigkeitsteilmenge aus dem Dosierventil ausgestoßen. Dies ist insbesondere dann vorteilhaft, wenn im späteren regulären Dosierbetrieb entsprechende Einzelmengen der Darreichungsformen beispielsweise als Pulverpfropfen oder dergleichen abgemessen werden soll. Die einzelne Flüssigkeitsteilmenge kann dabei an die zu dosierende Einzelmenge möglichst nah angepasst werden, wodurch eine für diesen Fall sehr exakte Kalibrierung herbeiführt wird.

In einer vorteilhaften Variante wird bei einer einzelnen Kalibriermessung eine Folge von mehreren Flüssigkeitsteilmengen aus dem Dosierventil ausgestoßen. Dies ist insbesondere dann vorteilhaft, wenn im späteren regulären Dosierbetrieb entsprechend mehrere Teilmengen der Darreichungsformen beispielsweise als Pellets oder dergleichen abgemessen werden soll. Die Folge von mehreren Flüssigkeitsteilmengen kann dabei hinsichtlich Anzahl und Einzelmenge an die zu dosierende Anzahl von Teilmengen möglichst nah angepasst werden, wodurch eine für diesen Fall sehr exakte Kalibrierung herbeiführt wird.

Ein Ausführungsbeispiel der Erfindung ist nachfolgend anhand der Zeichnung näher beschrieben. Es zeigen:
- Fig. 1: in einer schematischen Übersichtsdarstellung eine erfindungsgemäße Dosiereinrichtung für die Dosierung von Darreichungseinheiten mit einem kapazitiven Messsystem und einer zugehörigen Kalibriereinrichtung unter Einsatz einer einzelnen Flüssigkeitsteilmenge als Prüfkörper,
- Fig. 2: die nach Fig. 1 kalibrierte Dosiereinrichtung im regulären Dosierbetrieb in Verbindung mit einer kapazitiven Massenprüfung der einzelnen Darreichungseinheiten, und
- Fig. 3: eine Variante des in Fig. 1 dargestellten Kalibrierverfahrens unter Einsatz einer Folge von mehreren, unmittelbar aufeinanderfolgenden Flüssigkeitsteilmengen.

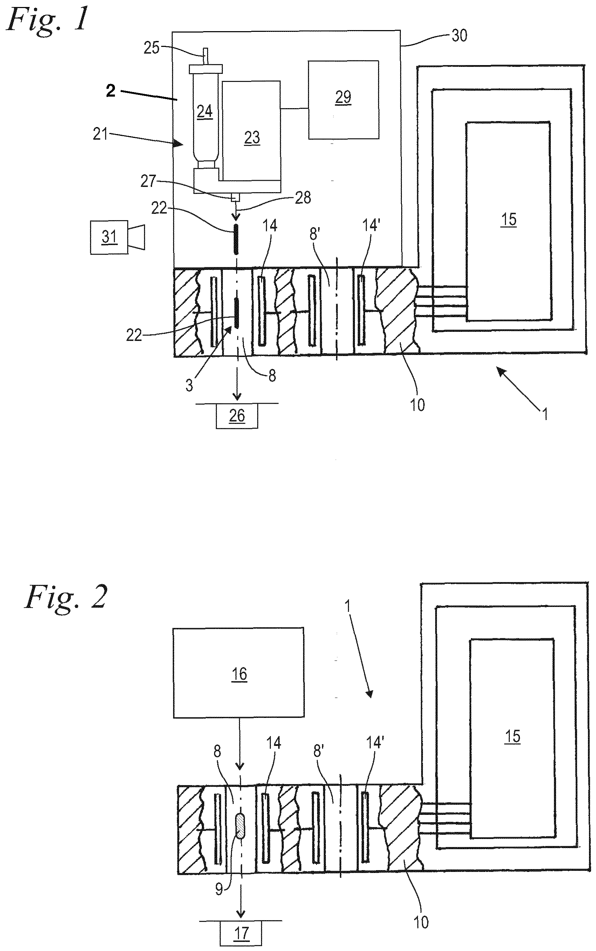

Die Fig. 1 und 2 zeigen in Zusammenschau eine schematische Schnittdarstellung der Dosiereinrichtung in zwei verschiedenen Konfigurationen. Die erfindungsgemäße Dosiereinrichtung umfasst neben einer schematisch angedeuteten Dosiereinheit 16 (Fig. 2), ein kapazitives Messsystem 1 sowie eine Kalibriereinrichtung 2 (Fig. 1) für das kapazitive Messsystem 1. Die Dosiereinrichtung ist dazu ausgelegt, insbesondere feste pharmazeutische Darreichungseinheiten 9 (Fig. 2) zu dosieren, hinsichtlich der tatsächlich erzielten Masse einer einzelnen Darreichungseinheit 9 zu prüfen und in einen Zielbehälter 17 zu überführen. Die genannten pharmazeutischen Darreichungseinheiten 9 können Tabletten, Pellets, komprimierte Pulverpfropfen oder dergleichen sein. Im Rahmen der Erfindung können aber auch flüssige Darreichungseinheiten 9 aus diesem oder aus anderen Bereichen wie beispielsweise Augentropfen vorgesehen sein. Außer pharmazeutischen Darreichungseinheiten 9 kommen auch solche aus dem Bereich der Nahrungsergänzungsmittel, aus dem Bereich der Pflegeprodukte oder dergleichen in Betracht. Als Zielbehälter 17 (Fig. 2) kommen Blisterverpackungen, Steckkapseln oder dergleichen, aber auch beispielsweise Zwischenbehälter für eine Weiterverarbeitung in Betracht.

Zunächst wird auf Fig. 2 Bezug genommen, in der die Dosiereinrichtung in gewöhnlicher Betriebskonfiguration gezeigt ist. In der nur schematisch angedeuteten Dosiereinheit 16 erfolgt eine insbesondere volumetrische Dosierung einer abgemessenen Teilmenge beispielsweise eines Pulvers oder eines Granulats unter Bildung einer schematisch angedeuteten Darreichungseinheit 9. Diese Darreichungseinheit 9 kann aus der Dosiereinheit 16 zum Zielbehälter 17 hin ausgeblasen werden. Alternativ oder zusätzlich kann die Gewichtskraft genutzt werden, um die Darreichungseinheit 9 aus der Dosiereinheit 16 in den Zielbehälter 17 fallen zu lassen.

Für eine hundertprozentige In-Prozess-Kontrolle passieren die einzelnen Darreichungseinheiten 9 auf ihrem Weg von der Dosiereinheit 16 zum Zielbehälter 17 die Messstrecke des eingangs schon erwähnten kapazitiven Messsystems 1. Das kapazitive Messsystem 1 umfasst hierfür einen Grundkörper 10 mit mindestens einem darin ausgebildeten, hier vertikal in Gewichtskraftrichtung ausgerichteten Messkanal 8. Im Messkanal 8 befindet sich die Messstrecke eines schematisch angedeuteten kapazitiven Messaufnehmers 14, welcher mit einer Auswerteeinheit 15 verbunden ist. Infolge einer weiter unten noch beschriebenen Kalibrierung des kapazitiven Messsystems 1 kann anhand des durch den kapazitiven Messaufnehmer 14 aufgenommenen, vom Durchtritt der Darreichungseinheit 9 erzeugten Messsignals in der Auswerteeinheit 15 die Masse jeder einzelnen Darreichungseinheit 9 mit hoher Präzision und Wiederholgenauigkeit bestimmt werden.

Optional kann parallel zum Messkanal 8 ein weiterer Messkanal 8' mit einem weiteren kapazitiven Messaufnehmer 14' angeordnet werden. Dabei wird dieser zusätzliche Messkanal 8' als Kompensationskanal zur Kompensierung beispielsweise von atmosphärischen Veränderungen eingesetzt, so dass letztere ohne Einfluss auf das ermittelte Messergebnis bleiben. Des Weiteren ist noch anzumerken, dass hier der Einfachheit halber nur ein Paar von Messkanälen 8, 8' mit kapazitiven Messaufnehmern 14, 14' gezeigt ist. In der Praxis wird eine mehrreihige Dosiereinheit 16 mit beispielsweise zwölf nebeneinander liegenden Dosierauslässen eingesetzt. Dementsprechend ist dann im Grundkörper 10 des kapazitiven Messsystems 1 eine korrespondierende Anzahl von Messkanälen 8 und ggf. auch von zusätzlichen Messkanälen 8' ausgebildet.

Damit aus dem Messergebnis des kapazitiven Messsystems 1 tatsächlich auch eine zuverlässige Aussage über die tatsächlich erreichte Masse jeder einzelnen Darreichungseinheit 9 getroffen werden kann, ist nach der Erfindung eine Kalibriereinrichtung 2 und ein zugehöriges Kalibrierverfahren für die Kalibrierung des kapazitiven Messsystems 1 vorgesehen, wie es sich aus der schematischen Darstellung nach Fig. 1 ergibt. Hier ist zur besseren Übersicht unter Weglassung der Dosiereinheit 16 und des Zielbehälters 17 das kapazitive Messsystem 1 nach Fig. 2 im Zusammenwirken mit der Kalibriereinrichtung 2 dargestellt.

Die Kalibriereinrichtung 2 umfasst ein Dosierventil 21 sowie ein angedeutetes Montagegestell 30, mittels dessen das Dosierventil 21 gegenüber dem zugeordneten Messkanal 8 ausgerichtet und in Position gehalten wird. Der hier gewählte Begriff "Dosierventil" umfasst solche Ventile, die mittels elektrischer Ansteuerung eine definierte Flüssigkeitsteilmenge 22 durch eine Auslassdüse 27 entsprechend einem Pfeil 28 abgeben. Gemäß der Erfindung findet ein solches, an sich bekanntes Dosierventil 21 in der Kalibriereinrichtung 2 derart Verwendung, dass hieraus in nachfolgend näher beschriebener Weise mindestens eine Flüssigkeitsteilmenge 22 von definiertem Volumen ausgestoßen und als Prüfkörper 3 durch den zugeordneten Messkanal 8 geleitet wird.

Im gezeigten bevorzugten Ausführungsbeispiel weist das Dosierventil 21 einen Piezo-Aktuator 23 und ein Flüssigkeitsreservoir 24 auf, wobei das Flüssigkeitsreservoir 24 einen Druckanschluss 25 zur Einspeisung eines Überdrucks aufweist. Vorliegend ist ein Dosierventil 21 in Form eines sogenannten Jet-Dosierventils mit einem Piezo-Aktuator 23 in Form eines handelsüblichen PICO Pµlse^{®} der Fa. Nordson EFD gewählt.

Im Flüssigkeitsreservoir 24 befindet sich eine Prüfflüssigkeit, aus der einzelne Flüssigkeitsteilmengen 22 zur Bildung der genannten Prüfkörper 3 gewonnen werden. Hierzu drückt der eingespeiste Überdruck die Flüssigkeit durch den Piezo-Aktuator 23, an dessen dem Messkanal 8 zugewandter Unterseite sich eine Auslassdüse 27 befindet. Das Dosierventil 21 bzw. dessen Piezo-Aktuator 23 wird durch ein schematisch angedeutetes Steuergerät 29 derart angesteuert, dass über eine definierte Öffnungszeit/Öffnungshub eine volumetrisch definierte Flüssigkeitsteilmenge 22 aus der Auslassdüse 23 austritt. Die Auslassdüse 23 ist in den Messkanal 8 hinein gerichtet, sodass die austretende Flüssigkeitsteilmenge 22 in Folge ihrer Austrittsgeschwindigkeit und unterstützt durch die Gewichtskraft von oben nach unten durch den Messkanal 8 hindurchtritt.

Die Kalibrierung des kapazitiven Messsystems 1 wird in erfindungsgemäßer Weise wie folgt vorgenommen: Zunächst wird mittels des Dosierventils 21 der Kalibriereinrichtung 2 mindestens eine Flüssigkeitsteilmenge 22 von definiertem Volumen erzeugt und entsprechend dem Pfeil 28 ausgestoßen. Diese mindestens eine Flüssigkeitsteilmenge 22 wird als Prüfkörper 3 durch den Messkanal 8 geleitet und anschließend optional in einem Auffangbehälter 26 aufgefangen.

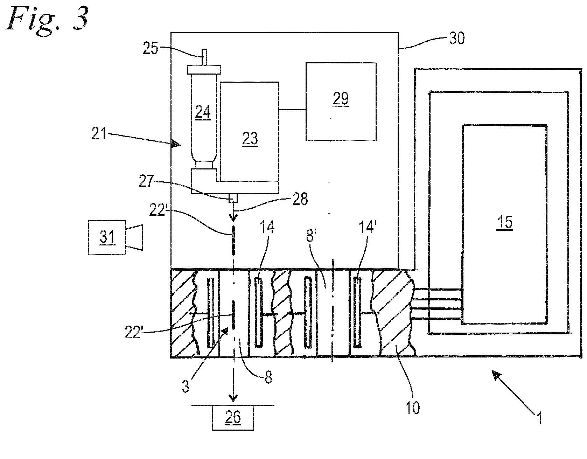

Das dabei entstehende Messsignal des kapazitiven Messaufnehmers 14 wird in der Auswerteeinheit 15 ausgewertet. Es kann ausreichen, bei einer einzelnen Kalibriermessung entsprechend der Darstellung nach Fig. 1 nur eine einzelne Flüssigkeitsteilmenge 22 als Prüfkörper 3 durch den Messkanal 8 zu führen, wobei dann auch nur ein einzelnes Mess- bzw. Kalibriersignal analog zu einem regulären Messsignal bei der Abfüllung von Einzelmengen wie Pulverpfropfen oder dergleichen entsteht. Fig 3. zeigt eine Variante dieses Ansatzes, in der bei einer einzelnen Kalibriermessung eine Folge von mehreren unmittelbar aufeinanderfolgenden Flüssigkeitsteilmengen 22' aus dem Dosierventil 21 ausgestoßen wird. Es entsteht dann eine korrespondierende Folge von mehreren unmittelbar aufeinanderfolgenden Mess- bzw. Kalibriersignalen analog zu regulären Messsignalen bei der gleichzeitigen Abfüllung beispielsweise von mehreren Pellets. In den übrigen Merkmalen und Bezugszeichen stimmen die Ausführungsbeispiele nach den Fig. 1 und 3 überein.

Die Anzahl der Kalibriermessungen wird so hoch gewählt, dass die Auswertung der zugeordneten Einzelmessungen in der Auswerteeinheit 15 statistisch signifikant ist. Optional kann bei den verschiedenen Kalibriermessungen ein Überdruck von jeweils unterschiedlichem Betrag über den Druckanschluss 25 in das Flüssigkeitsreservoir 24 eingespeist werden. Der Überdruck bestimmt die Austrittsgeschwindigkeit der jeweiligen Flüssigkeitsteilmenge 22 aus der Auslassdüse 27. Durch das genannte Variieren des Überdrucks werden also die verschiedenen Flüssigkeitsteilmengen 22 mit unterschiedlicher Geschwindigkeit ausgestoßen. Hierdurch kann die Sensitivität des kapazitiven Messsystems 1 hinsichtlich der Durchtrittsgeschwindigkeit geprüft werden, was bei Bedarf eine entsprechende Anpassung der Kalibrierung ermöglicht.

Jedenfalls kommen Prüfkörper 3 zum Einsatz, die aufgrund des definierten Volumens und der bekannten Eigenschaften der Prüfflüssigkeit bekannte dielektrische Eigenschaften haben. Diese werden als Messnormale herangezogen, und die damit im kapazitiven Messsystem 1 ermittelten Messwerte werden für eine Kalibrierung herangezogen. Dadurch ist eine Kalibrierung des kapazitiven Messaufnehmers für eine nahezu beliebige Masse einer einzelnen Darreichungseinheit 9 (Fig. 2) möglich. Die Darreichungseinheiten 9 werden schließlich nach erfolgter Kalibrierung mittels der Dosiereinrichtung gemäß Fig. 2 dosiert und dabei mittels des kalibrierten kapazitiven Messsystems 1 hinsichtlich ordnungsgemäß dosierter Masse geprüft. Innerhalb einer großen Messbreite von beispielsweise 1 bis 175 mg können definierte Zielmassen mit einer Messgenauigkeit von < 0,5% RSD (relativer Standardabweichung) bestimmt bzw. geprüft werden.

Weiter oben wurde schon erwähnt, dass in der Praxis eine mehrreihige Dosiereinheit 16 mit mehreren nebeneinander liegenden Dosierauslässen und einer korrespondierenden Anzahl von Messkanälen 8 eingesetzt wird. Dementsprechend kann auch eine mehrreihige Kalibriereinrichtung 2 vorgesehen sein. Bevorzugt kommt jedoch eine einzelne Kalibriereinrichtung 2 zum Einsatz, welche automatisiert mit ihrem einen Dosierventil 21 sequentiell über den einzelnen Messkanälen 8 positioniert und zentriert wird. Es erfolgt dann sequentiell eine Kalibrierung des kapazitiven Messsystems (1) in den einzelnen Messkanälen 8.

Der Darstellung der Fig. 1 und 3 ist noch entnehmbar, dass die Kalibriereinrichtung eine Kamera 31 zur Erfassung der Geometrie der ausgestoßenen Flüssigkeitsteilmenge 22 aufweist. Dem liegt zugrunde, dass die Auslassdüse 27 des Dosierventils 21 mit ihrem Düsendurchmesser den Durchmesser der ausgestoßenen Flüssigkeitsteilmenge 22 vorgibt. Über den Piezo-Aktuator 23 erfolgt eine Steuerung der Öffnungszeit des Dosierventils und damit der Förderzeit. Aus der Öffnungszeit und aus der druckabhängigen Fördergeschwindigkeit ergibt sich die Länge der ausgestoßenen Flüssigkeitsteilmenge 22, was in Verbindung mit dem ebenfalls bekannten Durchmesser eine Volumenbestimmung und unter Berücksichtigung der Dichte der Flüssigkeit eine Massebestimmung der ausgestoßenen Flüssigkeitsteilmenge 22 zulässt. Über diese seitens der Kamera 31 erfasste Geometrie (Durchmesser, Länge) lässt sich das tatsächliche Volumen der ausgestoßenen Flüssigkeitsteilmenge 22 prüfen bzw. verifizieren, und es kann ein Nachweis der Kalibriergenauigkeit geführt werden.

Schließlich sei noch angemerkt, dass der Prüfkörper sowohl hinsichtlich Größe als auch hinsichtlich Masse möglichst nahe am später im Betrieb zu messenden Produkt sein sollte. Es wird deshalb eine Kalibrierflüssigkeit gewählt, die hinsichtlich ihrer dielektrischen Eigenschaften möglichst nahe am Produkt liegt. Falls wasserhaltige Flüssigkeiten abzufüllen und zu messen sind, kann Wasser als Kalibrierflüssigkeit gewählt werden. Falls ein pharmazeutisches Pulver abzufüllen ist, kann ein Silikonöl, ein mineralisches Öl wie Weißöl oder dergleichen als Kalibrierflüssigkeit gewählt werden. In beiden Fällen liegen die dielektrischen Eigenschaften der Kalibrierflüssigkeit ausreichend nahe an den dielektrischen Eigenschaften des Produktes, was zu einer genauen Kalibrierung beiträgt.

## Patentansprüche

1. Verfahren zur Dosierung von Darreichungseinheiten (9) insbesondere aus dem Bereich der Pharmazie oder der Nahrungsergänzungsmittel, mittels einer Dosiereinrichtung und einer Kalibriereinrichtung (2), wobei die Dosiereinrichtung ein kapazitives Messsystem (1) aufweist, und wobei das kapazitive Messsystem (1) mindestens einen Messkanal (8) mit einem kapazitiven Messaufnehmer (14) für die Darreichungseinheiten (9) aufweist, wobei die Kalibriereinrichtung (2) ein Dosierventil (21) umfasst, welches dazu konfiguriert ist, eine Flüssigkeitsteilmenge (22) von definiertem Volumen auszustoßen und als Prüfkörper (3) durch den Messkanal (8) zu leiten, umfassend folgende Verfahrensschritte:
- Das kapazitive Messsystem (1) wird mittels der Kalibriereinrichtung (2) durch mindestens eine Kalibriermessung eines Prüfkörpers (3) kalibriert, wobei mittels des Dosierventils (21) der Kalibriereinrichtung (2) mindestens eine Flüssigkeitsteilmenge (22) von definiertem Volumen ausgestoßen wird, und wobei die mindestens eine Flüssigkeitsteilmenge (22) als Prüfkörper (3) durch den Messkanal (8) geleitet wird;
- Die Darreichungseinheiten (9) werden mittels der Dosiereinrichtung dosiert und dabei mittels des kalibrierten kapazitiven Messsystems (1) hinsichtlich ordnungsgemäß dosierter Masse geprüft.

2. Verfahren nach Anspruch 1,
**dadurch gekennzeichnet, dass** mehrere Kalibriermessungen vorgenommen werden, wobei bei verschiedenen Kalibriermessungen ein Überdruck von jeweils unterschiedlichem Betrag in das Flüssigkeitsreservoir (24) eingespeist wird, um Flüssigkeitsteilmengen (22) mit unterschiedlicher Geschwindigkeit auszustoßen.

3. Verfahren nach Anspruch 1 oder 2,
**dadurch gekennzeichnet, dass** mittels einer Kamera (31) die Geometrie der Flüssigkeitsteilmenge (22) erfasst und daraus das Volumen der Flüssigkeitsteilmenge (22) abgeleitet wird.

4. Verfahren nach einem der Ansprüche 1 bis 3,
**dadurch gekennzeichnet, dass** bei einer einzelnen Kalibriermessung eine einzelne Flüssigkeitsteilmenge (22) aus dem Dosierventil (21) ausgestoßen wird.

5. Verfahren nach einem der Ansprüche 1 bis 3,
**dadurch gekennzeichnet, dass** bei einer einzelnen Kalibriermessung eine Folge von mehreren, unmittelbar aufeinanderfolgenden Flüssigkeitsteilmengen (22') aus dem Dosierventil (21) ausgestoßen wird.

6. Verwendung eines Dosierventils (21) in einer Kalibriereinrichtung (2) für ein kapazitives Messsystem (1) in einer Dosiereinrichtung für Darreichungseinheiten (9) insbesondere aus dem Bereich der Pharmazie oder der Nahrungsergänzungsmittel, um mindestens eine Flüssigkeitsteilmenge (22) von definiertem Volumen auszustoßen und als Prüfkörper (3) durch den Messkanal (8) zu leiten.

7. Verwendung eines Dosierventils nach Anspruch 6,
**dadurch gekennzeichnet, dass** das Dosierventil (21) einen Piezo-Aktuator (23) und ein Flüssigkeitsreservoir (24) aufweist.

8. Verwendung eines Dosierventils nach Anspruch 7,
**dadurch gekennzeichnet, dass** das Flüssigkeitsreservoir (24) einen Druckanschluss (25) zur Einspeisung eines Überdrucks aufweist.

9. Verwendung eines Dosierventils nach einem der Ansprüche 6 bis 8,
**dadurch gekennzeichnet, dass** die Kalibriereinrichtung eine Kamera (31) zur Erfassung der Geometrie der ausgestoßenen Flüssigkeitsteilmenge (22) aufweist.

## Claims

1. Method for the metering of dosage units (9), in particular from the pharmaceutical field or the field of food supplements, by means of a metering installation and a calibration installation (2), wherein the metering installation has a capacitive measuring system (1), and wherein the capacitive measuring system (1) has at least one measuring channel (8) with a capacitive measuring sensor (14) for the dosage units (9), wherein the calibration installation (2) comprises a metering valve (21) which is configured to eject a liquid portion (22) of defined volume and convey it as a test body (3) through the measuring channel (8), the method comprising the following method steps:
- The capacitive measuring system (1) is calibrated, by means of the calibration installation (2), by at least one calibration measurement of a test body (3), wherein at least one liquid portion (22) of defined volume is ejected by means of the metering valve (21) of the calibration installation (2), and wherein the at least one liquid portion (22) is conveyed as a test body (3) through the measuring channel (8);
- The dosage units (9) are metered by means of the metering installation and are checked, in terms of correctly metered mass, by means of the calibrated capacitive measuring system (1).

2. Method according to claim 1,
**characterized in that** a number of calibration measurements are carried out, wherein an overpressure of different extent in each case is introduced into the liquid reservoir (24) for different calibration measurements, in order to eject liquid portions (22) at a different speed.

3. Method according to claim 1 or 2,
**characterized in that** the geometry of the liquid portion (22) is recorded by means of a camera (31), and the volume of the liquid portion (22) is deduced therefrom.

4. Method according to one of claims 1 to 3,
**characterized in that**, in an individual calibration measurement, an individual liquid portion (22) is ejected from the metering valve (21).

5. Method according to one of claims 1 to 3,
**characterized in that**, in an individual calibration measurement, a sequence of several liquid portions (22') immediately succeeding one another is ejected from the metering valve (21).

6. Use of a metering valve (21) in a calibration installation (2) for a capacitive measuring system (1) in a metering installation for dosage units (9), in particular from the pharmaceutical field or the field of food supplements, in order to eject at least one liquid portion (22) of defined volume and to convey it as a test body (3) through the measuring channel (8).

7. Use of a metering valve according to claim 6,
**characterized in that** the metering valve (21) has a piezo actuator (23) and a liquid reservoir (24).

8. Use of a metering valve according to claim 7,
**characterized in that** the liquid reservoir (24) has a pressure port (25) for the introduction of an overpressure.

9. Use of a metering valve according to one of claims 6 to 8,
**characterized in that** the calibration installation has a camera (31) for recording the geometry of the ejected liquid portion (22).

## Revendications

1. Procédé de dosage d'unités de délivrance (9), notamment du domaine de la pharmacie ou des compléments alimentaires, au moyen d'un dispositif de dosage et d'un dispositif d'étalonnage (2), le dispositif de dosage comportant un système de mesure capacitif (1), et le système de mesure capacitif (1) comportant au moins un conduit de mesure (8) pourvu d'un capteur de mesure capacitif (14) destiné aux unités de délivrance (9), le dispositif d'étalonnage (2) comprenant une vanne de dosage (21) qui est conçue pour expulser une portion de liquide (22) d'un volume défini et pour la guider en tant qu'échantillon (3) à travers le conduit de mesure (8), ledit procédé comprenant les étapes suivantes :
- le système de mesure capacitif (1) est étalonné au moyen du dispositif d'étalonnage (2) par au moins une mesure d'étalonnage d'un échantillon (3), au moins une portion de liquide (22) d'un volume défini est expulsée au moyen de la vanne de dosage (21) du dispositif d'étalonnage (2), et l'au moins une portion de liquide (22) est guidée en tant qu'échantillon (3)à travers le conduit de mesure (8) ;
- les unités de délivrance (9) sont dosées au moyen du dispositif de dosage et vérifiées quant à la masse correctement dosée au moyen du système de mesure capacitif étalonné (1).

2. Procédé selon la revendication 1,
**caractérisé en ce que** plusieurs mesures d'étalonnage sont effectuées, pour différentes mesures d'étalonnage une surpression d'une valeur à chaque fois différente est introduite dans le réservoir de liquide (24) afin d'expulser des quantités de liquide partielles (22) à différentes vitesses.

3. Procédé selon la revendication 1 ou 2,
**caractérisé en ce que** la géométrie de la quantité de liquide partielle (22) est capturée au moyen d'une caméra (31) et le volume de la portion de liquide (22) est dérivé à partir de ladite géométrie.

4. Procédé selon l'une des revendications 1 à 3,
**caractérisé en ce que**, lors d'une seule mesure d'étalonnage, une seule portion de liquide (22) est expulsée de la vanne de dosage (21).

5. Procédé selon l'une des revendications 1 à 3,
**caractérisé en ce que**, lors d'une seule mesure d'étalonnage, une séquence de plusieurs portions de liquide (22') immédiatement successives est expulsée de la vanne de dosage (21).

6. Utilisation d'une vanne de dosage (21) dans un dispositif d'étalonnage (2) destiné à un système de mesure capacitif (1) dans un dispositif de dosage destiné à des unités de délivrance (9), en particulier du domaine de la pharmacie ou des compléments alimentaires, afin d'expulser au moins une portion de liquide (22) d'un volume défini et la guider en tant qu'échantillon (3) à travers le conduit de mesure (8).

7. Utilisation d'une vanne de dosage selon la revendication 6,
**caractérisée en ce que** la vanne de dosage (21) comporte un actionneur piézoélectrique (23) et un réservoir de liquide (24).

8. Utilisation d'une vanne de dosage selon la revendication 7,
**caractérisée en ce que** le réservoir de liquide (24) comporte un raccord de pression (25) destiné à l'injection d'une surpression.

9. Utilisation d'une vanne de dosage selon l'une des revendications 6 à 8, **caractérisée en ce que** le dispositif d'étalonnage comporte une caméra (31) destinée à capturer la géométrie de la portion de liquide (22) expulsée.
